# EUROPEAN PATENT SPECIFICATION

(11) **EP 2 859 659 B1**
(45) Date of publication and mention of the grant of the patent: **12.08.2020**
(21) Application number: 13801200.0
(22) Date of filing: 07.06.2013
(51) Int. Cl.: H04B 1/12, H04B 1/525

(54) **SYSTEMS AND METHODS FOR CANCELLING INTERFERENCE USING MULTIPLE ATTENUATION DELAYS**
SYSTEME UND VERFAHREN ZUR INTERFERENZUNTERDRÜCKUNG MIT MEHRFACHER DÄMPFUNGSVERZÖGERUNG
PROCÉDÉS ET MÉTHODES SERVANT À L'ANNULATION DES INTERFÉRENCES AU MOYEN DE MULTIPLES RETARDS D'ATTÉNUATION

(30) Priority: 08.06.2012 US 201261657567 P
(43) Date of publication of application: 15.04.2015
(73) Proprietor: The Board of Trustees of the Leland Stanford Junior University, Stanford, CA 94305-2038 (US)
(72) Inventor: HONG, Steven, Palo Alto, CA 94306 (US); MEHLMAN, Jeff, Palo Alto, CA 94306 (US); BHARADIA, Dinesh, Palo Alto, CA 94306 (US); KATTI, Sachin, Palo Alto, CA 94306 (US)
(74) Representative: Epping - Hermann - Fischer
(86) International application number: PCT/US2013/044830
(87) International publication number: WO 2013/185106

(56) References cited:
- EP-A1- 2 237 434
- RU-C2- 2 256 985
- US-A- 4 952 193
- US-A- 5 691 978
- US-A1- 2004 106 381
- US-A1- 2007 105 509
- US-A1- 2011 319 044
- US-B1- 6 215 812
- US-B2- 8 175 535

## Description

### FIELD OF THE INVENTION

The present invention relates to wireless communication systems, and more particularly to cancellation or reduction of self-interference in full-duplex communication systems. In US 5,691,978 a full-duplex radio communications system for cancelling self-interference is described and in US 2011/0319044 A1 a multi-path signal interference cancellation system is described.

### BACKGROUND

A wireless communication system operating in a half-duplex mode may use the same frequency to either transmit or receive data. When operating in a full-duplex mode, the system may simultaneously transmit and receive data but the simultaneous transmission and reception of data occur at different frequencies. For example, a full-duplex cell phone uses a first frequency for transmission and a second frequency for reception of signals. Using the same frequency for simultaneous transmission and reception in a conventional wireless system results in significant amount of self-interference at the receiver thereby rendering the system ineffective in receiving the desired signal. Reducing the self-interference signal in a full duplex wireless communication system remains a challenge.

### BRIEF SUMMARY OF THE INVENTION

The present invention is defined by the features of the independent claims.

### BRIEF DESCRIPTION OF THE DRAWINGS

Figure 1 is a simplified block diagram of a full-duplex wireless communication system, in accordance with one embodiment of the present invention.
Figure 2 is a simplified block diagram of a full-duplex wireless communication system, in accordance with another embodiment of the present invention.
Figure 3 is a simplified block diagram of the attenuation and delay circuitry disposed in the full-duplex wireless communication systems of Figures 1 and 2, in accordance with one embodiment of the present invention.
Figure 4 shows first and second windows each defined by the delays of different pairs of associated paths of the attenuation and delay circuitry of Figure 3, in accordance with one embodiment of the present invention.
Figure 5 shows the intersections between the self-interference signal and a pair of sinc functions centered at the boundaries of the first window of Figure 4, in accordance with one embodiment of the present invention;
Figure 6 shows the level of attenuations applied to the pair of signals travelling in the paths defining the first window shown in Figure 5, in accordance with one embodiment of the present invention.
Figure 7 shows the intersections between the self-interference signal and a pair of sine functions centered at the boundaries of the second window of Figure 4, in accordance with one embodiment of the present invention.
Figure 8 shows the level of attenuations applied to the two pairs of signals travelling in the paths defining the first and second windows shown in Figure 5, in accordance with one embodiment of the present invention.
Figure 9 is an exemplary plot showing the relationship between the number of delay/attenuation paths and the amount of cancellation, in accordance with one embodiment of the present invention.
Figure 10 is a flowchart for cancelling or reducing a self-interference signal, in accordance with one embodiment of the present invention.

### DETAILED DESCRIPTION OF THE INVENTION

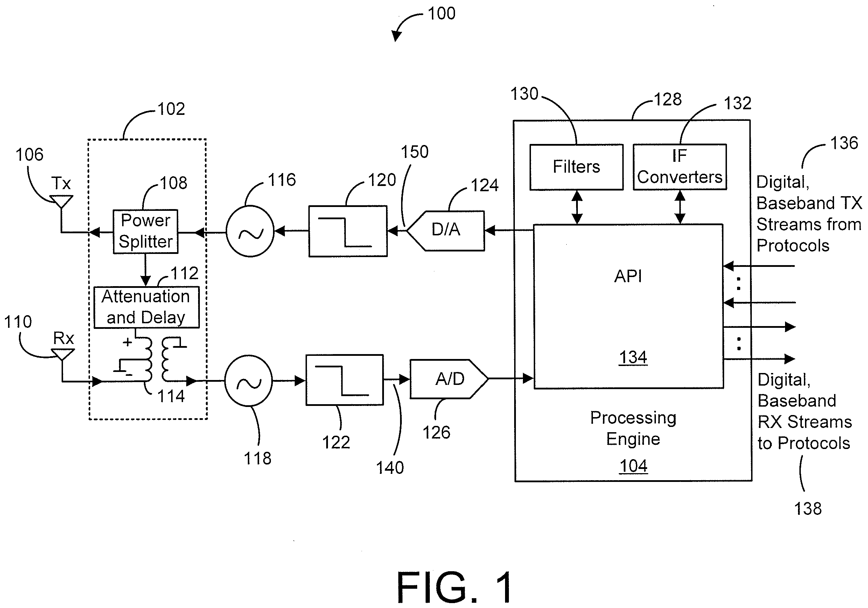

Figure 1 is a simplified block diagram of a full-duplex wireless communication device 100, in accordance with one embodiment of the present invention. Wireless communication device 100, which may be a cellular phone, a base station, an access point or the like, is configured to transmit data/signals via a downlink and receive data/signals via an uplink. Wireless communication device (herein alternatively referred to as device) 100 is shown, as including, in part, a digital-to-analog converter (DAC) 122, a filter 120, a frequency upconverter 116, and a transmit antenna 106 disposed in the transmit path 150. Device 100 is further shown as including, in part, a receive antenna 110, a frequency down converter 118, a filter 122, and an analog-to-digital converter (ADC) 126 disposed in the receive path 140. Device 100 is also shown as including a processing engine 104, and a self-cancellation circuit 102. Processing engine 104 is configured to control/process various operations as described further below. Self-cancellation circuit 102, in turn, is shown as including a power splitter 108, an attenuation and delay circuit 120, and a balun 114. Device 100 may be compatible and operate in conformity with one or more communication standards such as WiFi™, Bluetooth®, GSM EDGE Radio Access Network ("GERAN"), Universal Terrestrial Radio Access Network ("UTRAN"), Evolved Universal Terrestrial Radio Access Network ("E-UTRAN"), Long-Term Evolution (LTE), and the like.

As shown, the received Radio frequency (RF) signal is converted by frequency downconverter 118 to a baseband signal which is filtered by filter 122 and converted to a digital signal by ADC 126. Processing engine 104 performs baseband signal processing and filtering operations on the signal it receives from ADC 126 and delivers its output signal to devices associated with the same or other communication layers. Likewise, the transmit signal supplied by processing engine 104 is converted to an analog signal by DAC 124, filtered by filter 120 and upconverted to an RF signal by frequency upconverter 116 before being delivered to antenna 106 by splitter 108.

Power splitter 108 is adapted to split and deliver a first portion of the transmit signal to transmit antenna 106 via its high power port, and a second portion of the transmit signal to attenuation and delay circuit 120 via its low power port. Power splitter 108 may be a passive component adapted to deliver, for example, -8 dBc of the signal power it receives to attenuation and delay circuit 120. Attenuation and delay circuit 120 is adapted to generate a multitude of weighted and delayed samples (versions) of the transmit signal it receives, and combine these signals to generate and deliver to balun 114 a signal representative of the self-interference signal received by antenna 110. Balun 114 is adapted to subtract the signal it receives from attenuation and delay circuit 120 from the signal it receives from antenna 110 and deliver the resulting signal to frequency downconverter 118. Accordingly, the self-interference component of the signal supplied by balun 114 to frequency upconverter 118 is canceled or substantially degraded. In one embodiment, self-cancellation circuit 102 may cancel, e.g., 20-25 dB of self-interference signal. Self-cancellation circuit 102 is further adapted to adjust the amount of self-cancellation in order to accommodate the dynamic range of ADC 126 and ensure that ADC 126 does not saturate.

Processing engine 104 is configured, among other functions, to resample signal streams. The digital baseband transmission streams 136 received by processing engine 104 may be up-sampled (e.g., from 40 Msamples/sec to 200 Msamples/sec) by an up-sampler disposed in processing engine 104. Processing engine 104 is further configured to low-pass filter the up-sampled streams to remove undesirable aliases of the up-sampled streams. Processing engine 104 is further shown as including, in part, a multitude of filters 130, intermediate frequency (IF) converters 132, and an application programming interface ("API") 134. Filters 130 may be programmable and include one or more finite impulse response ("FIR") filters, one or more infinite impulse response ("IIR") filters, and the like. In one embodiment, one or more of the programmable digital filters disposed in processing engine 104 remove the remaining self-interference signal that may be present at the output of self-cancelation circuit 102. Intermediate frequency converters 132 are adapted to convert the incoming digital baseband 136 to a digital intermediate frequency ("IF") when necessary.

API 134 is adapted to program and interconnect one or more of the filters 130, program the IF converter 132 to achieve the desired results, configure the up/down samplers, and up/down converters. API 134 is further adapted to coordinate the flow of signal streams across the various components disposed in filters 130 and IF converters 132, collect the incoming signal streams 136, add them, and send the resulting stream to DAC 124. For the signals that processing engine 104 receives from the receive path, API 134 performs the above signal processing/control operations in reverse.

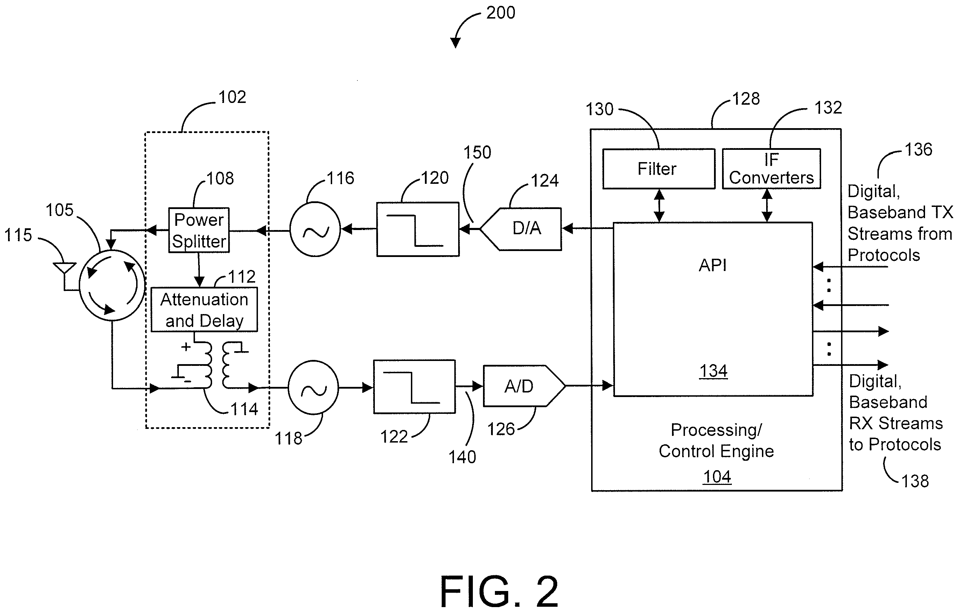

Figure 2 is a simplified block diagram of a full-duplex wireless communication device (hereinafter alternatively referred to as device) 200, in accordance with another embodiment of the present invention. Device 200 is similar to device 100 except that device 200 has a single antenna 115 for both transmission and reception of signals. Device 200 also includes a circulator 105 that provides isolation between its ports. Circulator 105 is adapted to concurrently deliver the transmit signal and the receive signal to and from the antenna 115. The transmit signal is passed through power splitter 108 which delivers a relatively large portion (e.g. 85%) of the transmit signal power to the transmit antenna 115, and a relatively smaller portion of the transmit signal to attenuation and delay circuit 102. In one exemplary embodiments, circulator 105 provides approximately 15 dB of isolation between the transmit and receive paths, thereby reducing the self-interference on the receive port by approximately 15 dB.

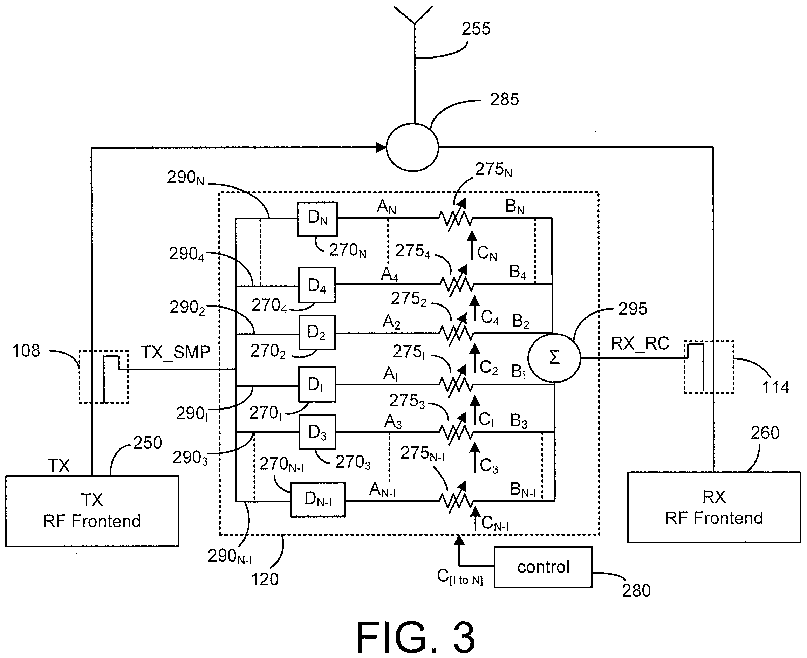

Figure 3 is a simplified block diagram of an exemplary attenuation and delay circuit 120, as shown in Figures 1 and 2, in communication with a transmit front end block 250 and a receive front end block 260. Antenna 255 is coupled to both the receive front end 260 and the transmit front end 250 via isolator 285. As described above, a portion of the transmit signal Tx leaks into and is present in the receive signal RX in the form a self-interference signal. Attenuation and delay circuit 120 is adapted to generate a signal RX_RC that represents the self-interference signal. The self-interference signal RX_RC is subtracted from the receive signal RX by subtractor 114, the output signal of which is delivered to RF front end block 260 for further processing, as described above in reference to Figures 1 and 2

As shown, attenuation and delay circuit 120 receives a sample TX_SMP of the transmit signal TX via splitter 108. Attenuation and delay circuit 120 is shown as including a multitude of paths 290₁, 290₂...290_{N-1}, 290_{N}, where N is an integer greater than or equal to 2. Each path is shown as including a delay element 270ᵢ, where i is an index varying from 1 to N, and a variable attenuator 275ᵢ. The delay elements 290ᵢ may generate a fixed or a variable delay. The level of attenuation of each variable attenuator 270ᵢ may be varied in accordance with a predefined algorithm implemented by controller 280. Each delay element 270ᵢ is adapted to generate a signal Aᵢ that is a delayed version of signal TX_SMP. Each variable attenuator 275ᵢ is adapted to attenuate the amplitude of the signal Aᵢ it receives in accordance with the control signal Cᵢ applied thereto by controller 280 so as to generate an attenuated (weighted) signal Bᵢ. Accordingly, signals Bᵢ are different delayed and weighted versions of signal TX_SMP. Combiner 295 combines signals Bᵢ to generate signal RX_RC representative of the self-interference component of the transmit signal. In one embodiment combiner 295 is an adder adding signals Bᵢ to generate signal RX_RC. In other embodiments, combiner 295 may perform other arithmetic or logic functions on signals Bᵢ to generate signal RX_{_}RC.

As described above, attenuation and delay circuit 120 is operative to reconstruct the self-interference signal from the signal values present on paths (alternatively referred to herein as taps) 290ᵢ. Since both the self-interference signal and the time-delayed, weighted signals Bᵢ present on the taps are samples of the same transmit signal, the reconstruction of the self-interference signal is similar to band-limited interpolation. Furthermore, since only a finite number of taps are available, a windowed interpolation may be used to reconstruct signal RX_RC representative of the self-interference signal. Therefore, the signal representative of the self-interference signal, in accordance with one embodiment of the present invention, is generated from signals Bᵢ that are delayed and weighted versions of the same sampled transmit signal TX_SMP .

To generate a signal representative of the self-interference signal, in accordance with one exemplary embodiment, the delays generated in each pair of associated paths (taps) 290ᵢ are selected such that the arrival time of the self-interference signal at subtractor 114 falls within the difference between these two delays (also referred to herein as the delay window). Accordingly, the delay generated by a first tap in each pair of associated taps 290ᵢ is less than the arrival time of the self-interference signal at subtractor 114 (referred to herein as T_{self_int}) and the delay generated by a second tap in each pair of associated taps 290ᵢ is greater than T_{self_int}. In one embodiment, the center two taps, namely taps 290₁ and 290₂, form the first pair of associated taps such that, for example, the delay TL₁ generated by delay element 270₁ is less than T_{self_int} and the delay TH₁ generated by delay element 2702 is greater than T_{self_int}. TL₁ and TH₁ are thus selected to be the closest such delays to T_{self_int}. The next two taps closest to the center taps, namely taps 290₃ and 290₄, form the second pair of associated taps such that, for example, the delay TL₂ generated by delay element 2703 is less than T_{self_int} and the delay TH₂ generated by delay element 2704 is greater than T_{self_int}. TL₂ is shorter than TL₁, and TH₂ is longer than TH₁, therefore TL₂ and TH₂ are selected to be the second closest such delays to T_{self_int}. The delay of the remaining pairs of associated taps are similarly selected and thus are not described herein. It is understood that in other embodiments, associated taps may be arranged and selected differently. For example, in another embodiment, taps 290₁ and 290₄ may be selected as associated taps and used to form a delay window.

The following description is made with reference to an arrangement according to which the center taps 290₁ and 290₂ form the first pair of associated taps, the next two taps 290₃ and 290₄ form the second pair of associated taps, the next two taps 290₅ and 290₆ form the third pair of associated taps,...., and the last two taps 290_{N-1} and 290_{N} form the last pair of associated taps, as described above. Furthermore, in the following, the delays and interpolations associated with only 2 pairs of associated taps, namely associated taps 290₁/ 290₂ and associated taps 290₃/ 290₄ are described.

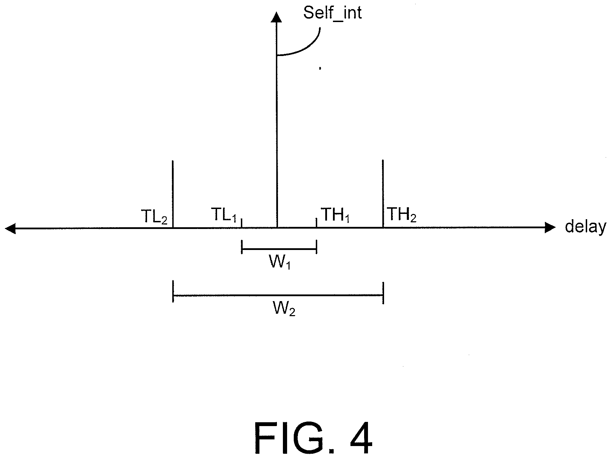

As shown in Figure 4, TL₁ represents the time around which signal B₁ is generated (the delays across attenuators 275ᵢ are assumed to be negligible relative to the delays across delay elements 270ᵢ), TH₁ represents the time around which signal B₂ is generated, TL₂ represents the time around which signal B₃ is generated, and TH₂ represents the time around which signal B₄ is generated. As is seen, time delays TH₁ and TL₁ are selected (using delay elements 270₁ and 270₂) such that T_{self_int} falls within the window Wi defined by the difference TH₁-TL₁. Likewise, time delays TH₂ and TL₂ are selected such that T_{self_int} falls within the window W₂ defined by the difference TH₂-TL₂. Accordingly, as described above and shown in Figure 4, for each pair of associated taps defining a window, the amount of delay generated by one of the delay paths is longer than T_{self_int}, and the amount of delay generated by the other one of the delay paths is shorter than T_{self_int.} For example, referring to window W₁, TH₁ is greater than T_{self_int} and TL₁ is smaller than T_{self_int}. Although the above description is made with reference to paths 290₁, 290₂, 290₃, and 290₄ only, it is understood that all the tap delays are selected such that T_{self_int} falls either within a window defined by any pair of associated paths. If the attenuation and delay path 120 includes an odd number of paths (i.e., N is an odd number), (N-1) of the delay path may be used to form associated pairs, as described above. The delay T_{N} associated with the last remaining delay path (the Nth path) is selected such that T_{self_int} falls within a time from T_{N}.

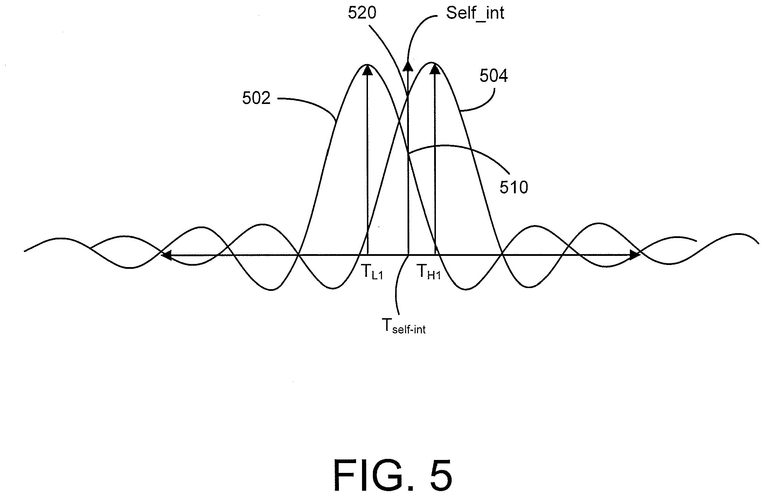

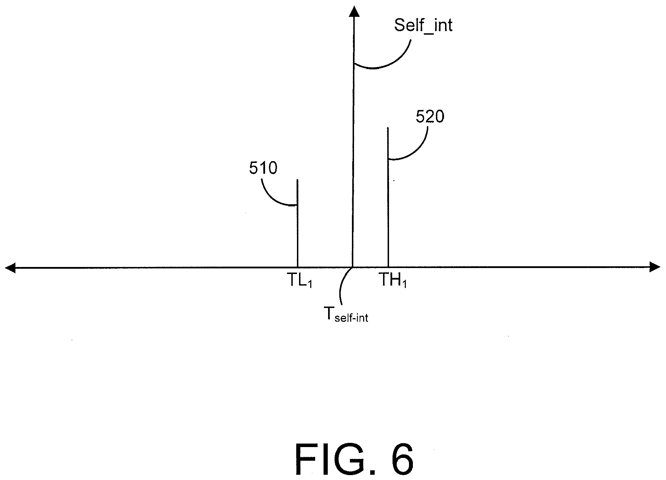

To determine the level of attenuation for each attenuator 275ᵢ, in accordance with one exemplary embodiment of the present invention, sinc interpolation is used; it is however understood that any other interpolation scheme may also be used. To achieve this, for each window, the intersection of a pair of sinc functions-each centered at one of the window boundaries and each having a peak value substantially equal to the peak value of an estimate of the self-interference signal-and the estimate of the interference signal, shown as Self_int, is determined. For example, referring to Figure 5, sinc function 502 centered at TL₁ is seen as intersecting the estimate of the self-interference signal Self_int at point 510, and sinc function 504 centered at TH₁ is seen as intersecting signal Self_int at point 520. The heights of points 510 and 520 define the level of attenuations applied to attenuators 275₁ and 275₂, respectively. Figure 6 shows the attenuation levels 510, 520 so determined and applied to attenuators 275₁ and 275₂ respectively.

Since the amplitude and delay of the self-interference signal is not known in advance, as described above, an estimate (signal Self_int) of both the delay and amplitude of the self-interference signal is initially used by control block 280 for interpolation. As described further below, the initial estimates are used to determine the attenuation levels of the attenuators 275ᵢ, thereby to generate signals Bᵢ which are subsequently combined to generate signal RX_RC. The amount of self-interference at the receiver is then measured to determine whether one or more conditions are satisfied. One such condition may be to determine whether the amount of self-interference has reached below a minimum threshold level. If the condition(s) is not met, an iterative optimization algorithm is performed by control block 280 to arrive at new estimate(s) for either the delay or amplitude, or both the delay and amplitude, of the self-interference signal. The new estimate(s) are subsequently used, as described further below, to generate new attenuation levels for the attenuators, in turn resulting in generation of revised signals Bᵢ as well as revised self-interference signal. The process of measuring the level of the self-interference signal being canceled or reduced at the receiver, arriving at a new estimate for the self-interference signal based on such measurement, and varying the attenuation levels of the attenuators in response continue until the predefined condition(s) is met.

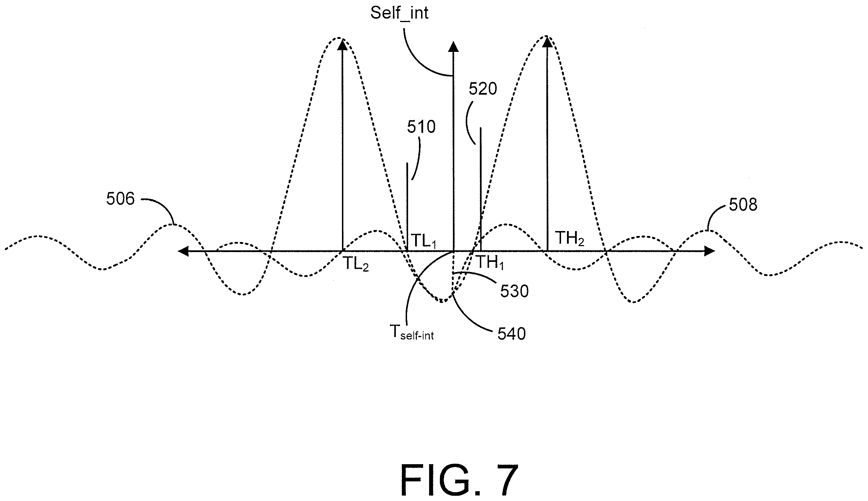

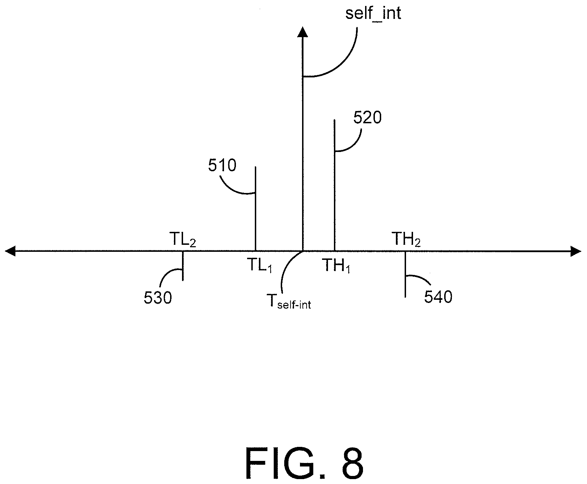

Figure 7 shows the intersection of sinc functions positioned at the window boundaries TL₂ and TH₂ with the self-interference signal. As is seen, sinc function 506 centered at TL₂ is seen as intersecting the self-interference signal at point 530, and sinc function 508 centered at TH₂ is seen as intersecting the self-interference signal at point 540. The heights of points 530 and 540 define the level of attenuations applied to attenuators 275₃ and 275₄, respectively. Figure 8 shows the attenuation levels 510, 520, 530, 540 so determined and applied to attenuators 275₁, 275₂, 275₃, and 275₄ respectively. As is seen in Figures 7 and 8, the attenuations levels applied to attenuators 275₁, 275₂ have positive values (have a positive polarity), whereas the attenuations levels applied to attenuators 275₃, 275₄ have negative values and thus have a negative polarity. It is understood that the attenuation levels for the remaining taps are similarly determined. Further details regarding the application of the sampling theory to reconstruct a sampled signal is provided in "Multirate Digital signal Processing" by Ronald E. Crochiere, and Lawrence R. Rabiner, Prentice-Hall Processing series, 1983.

Combiner 295 is adapted to combine signals B₁, B₂...B_{N} thereby to generate signal RX_RC representative of the self-interference signal. As the delay of the self-interference signal changes and its position within the windows moves, the intersections of the self-interference signal and the sinc functions change, thereby causing the attenuation levels to change, which in turn causes the reconstructed signal representative of the self-cancelation signal to also change to track the self-interference signal.

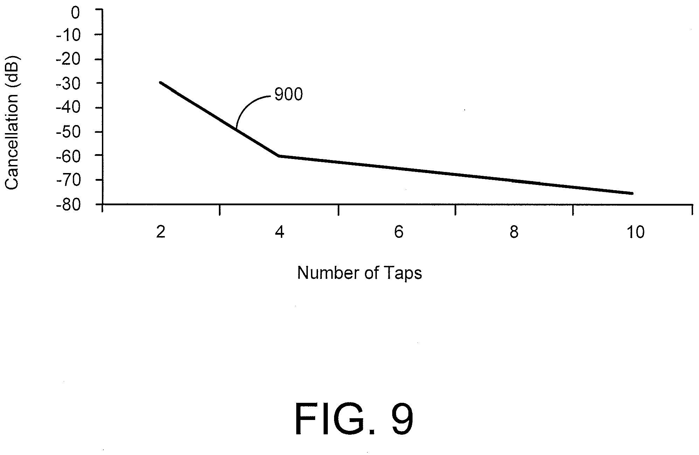

The higher the number of taps, the greater is the amount of self-interference. Figure 9 is an exemplary plot 900 of the amount of self-interference cancellation as a function of the number of taps. As is seen, the amount of self-interference cancellation for two taps and ten taps are respectively shown as being approximately -30 dB and -75 dB. In other words, by increasing the number of taps, self-interference cancellation on a wider bandwidth is achieved.

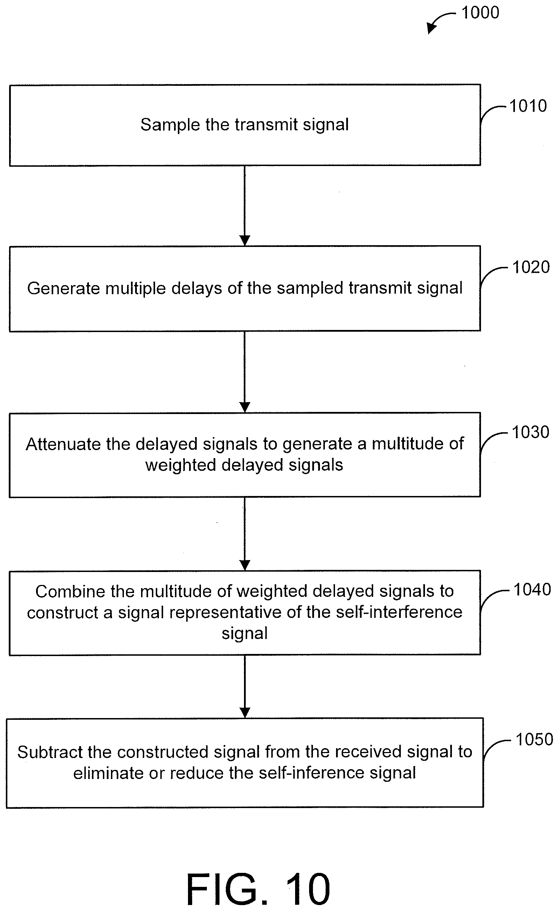

Figure 10 shows a flowchart 1000 for canceling or reducing the self-interference signal at a receiver of a communication device, in accordance with one embodiment of the present invention. To achieve this, the transmit signal is sampled 1010. Thereafter, a multitude of delayed version of the sampled transmit signal are generated 1020. The delayed versions of the sampled transmit signal are attenuated 1030 to generate a multitude of weighted and delayed signals. The multitude of weighted, delayed signals are thereafter combined 1040 to reconstruct a signal representative of the self- interference signal. The reconstructed signal is subsequently subtracted from the received signal to cancel or reduce the self-interference signal at the receiver.

## Claims

1. A wireless communication device (100) comprising:
at least one antenna (255) for receiving or transmitting a signal;
a cancellation circuitry (102) adapted to receive a first sample of a transmit signal, said cancellation circuitry comprising:
a control block;
a subtractor (114) adapted to receive a self-interference signal via the antenna, said self-interference signal being caused by the transmission of the signal;
N paths (290i), each path comprising a delay element (270i) and an associated variable attenuator (275i) whose attenuation level varies in response to the control block, each path receiving the first sample of the transmit signal and generating a delayed and weighted version of the first sample of the transmit signal;
wherein the N paths comprise 2M paths forming M associated pairs of delay paths,
wherein a delay element disposed in the first path of each pair of the M associated paths generates a delay shorter than an arrival time of the self-interference signal at the subtractor, and wherein a delay element disposed in the second path of each pair of the M associated paths generates a delay longer than the arrival time of the self-interference signal at the subtractor;
a combiner (295) adapted to combine the N delayed and weighted versions of first sample of the transmit signal to construct a signal representative of a first portion of the self-interference signal;
wherein the subtractor is adapted to subtract the constructed signal from the self-interference signal, wherein N is an integer greater than or equal to 2.

2. The wireless communication device of claim 1, wherein the delays generated by the delay elements (270i) of each associated pair of delay paths forming a window within which the corresponding self-interference signal arrives at the subtracter.

3. The wireless communication device of claim 2, wherein N is equal to 2M.

4. The wireless communication device of claim 2, wherein said controller (280) determines the attenuation levels of the variable attenuators in accordance with values of intersections of an estimate of the self-interference signal and 2M sinc functions centered at boundaries of the M windows.

5. The wireless communication device of claim 1, further comprising:
a frequency downconverter (118) configured to downconvert an output signal of the subtractor;
a filter (122) adapted to filter out unselected portions of the downconverted signal; and
an analog-to-digital converter (126) adapted to convert an output signal of the filter to a digital signal.

6. The wireless communication device of claim 5, further comprising:
a processing engine (104) configured to remove a second portion of the self-interference signal from the output signal of the analog-to-digital converter; wherein said processing engine comprises a plurality of programmable filters.

7. The wireless communication device of claim 5, further comprising:
a frequency upconverter (116) configured to upconvert a transmit signal;
a filter (120) adapted to filter out unselected portions of the upconverted signal; and
a digital-to-analog converter (124) adapted to convert an output signal of the filter to an analog signal.

8. A method of canceling or reducing a self-interference signal, the method comprising:
receiving a first sample of a transmit signal at a receiver (1010);
generating N delayed versions of the first sample of the transmit signal (1020);
attenuating the N delayed signals to generate N attenuated and delayed signals (1030);
combining the N attenuated and delayed signals to generate a combined signal representative of a first portion of a self-interference signal (1040);
subtracting the combined signal from a self-interference signal received via an antenna, said self-interference signal being caused by a transmission of the transmit signal (1050);
wherein the N delayed versions of the first sample of the transmit signal comprise 2M delayed versions of the first sample forming M associated pairs of delayed versions of the first sample;
setting a first delay associated with the first delayed version of each pair of the M associated pairs of delayed versions of the first sample of the transmit signal, to a value less than an arrival time of the received self-interference signal; and
setting a second delay associated with the second delayed version of each pair of the M associated pairs of delayed versions of the first sample of the transmit signal, to a value greater than the arrival time of the received self-interference signal;
wherein N is an integer greater than or equal to 2.

9. The method of claim 8, further comprising:
forming M time windows;
selecting the N delays such that the arrival time of the received self-interference signal falls within each of the M time windows.

10. The method of claim 9, wherein N is equal to 2M.

11. The method of claim 9, further comprising:
attenuating the N delayed signals in accordance with values of intersections of an estimate of the self-interference signal and 2M sinc functions centered at boundaries of the M windows.

12. The method of claim 11, further comprising:
setting a peak value of at least a subset of the 2M sinc functions substantially equal to an amplitude of the estimate of the self-interference signal.

13. The method of claim 8, further comprising:
downconverting the difference between the combined signal and the received self-interference signal to generate a downconverted signal;
filtering out unselected portions of the downconverted signal; and
converting the filtered signal to a digital signal.

14. The method of claim 13, further comprising:
removing a second portion of the self-interference signal from the converted digital signal.

15. The method of claim 14, further comprising:
removing a second portion of the self-interference signal from the converted digital signal using a plurality of programmable filters.

## Patentansprüche

1. Drahtlose Kommunikationsvorrichtung (100), umfassend:
mindestens eine Antenne (255), um ein Signal zu empfangen oder zu senden;
eine Unterdrückungsschaltung (102), die dazu angepasst ist, eine erste Abtastung eines Sendesignals zu empfangen, wobei die Unterdrückungsschaltung umfasst:
einen Steuerblock;
einen Subtrahierer (114), der dazu angepasst ist, ein Eigeninterferenzsignal über die Antenne zu empfangen, wobei das Eigeninterferenzsignal durch die Übertragung des Signals verursacht ist;
N Pfade (290i), wobei jeder Pfad ein Verzögerungselement (270i) und ein zugehöriges variables Dämpfungsglied (275i) umfasst, dessen Dämpfungspegel im Ansprechen auf den Steuerblock variiert, wobei jeder Pfad die erste Abtastung des Sendesignals empfängt und eine verzögerte und gewichtete Version der ersten Abtastung des Sendesignals generiert;
wobei die N Pfade 2M Pfade umfassen, die M zugehörige Paare von Verzögerungspfaden bilden,
wobei ein Verzögerungselement, das im ersten Pfad jedes Paars der M zugehörigen Pfade angeordnet ist, eine Verzögerung generiert, die kürzer ist als eine Ankunftszeit des Eigeninterferenzsignals am Subtrahierer, und wobei ein Verzögerungselement, das im zweiten Pfad jedes Paars der M zugehörigen Pfade angeordnet ist, eine Verzögerung generiert, die länger ist als die Ankunftszeit des Eigeninterferenzsignals am Subtrahierer;
einen Kombinator (295), der dazu angepasst ist, die N verzögerten und gewichteten Versionen der ersten Abtastung des Sendesignals zu kombinieren, um ein Signal zu konstruieren, das für einen ersten Teil des Eigeninterferenzsignals repräsentativ ist;
wobei der Subtrahierer dazu angepasst ist, das konstruierte Signal vom Eigeninterferenzsignal zu subtrahieren, wobei N eine ganze Zahl größer als oder gleich 2 ist.

2. Drahtlose Kommunikationsvorrichtung nach Anspruch 1, wobei die Verzögerungen, die von den Verzögerungselementen (270i) jedes zugehörigen Paars von Verzögerungspfaden generiert werden, ein Fenster bilden, in dem das entsprechende Eigeninterferenzsignal am Subtrahierer ankommt.

3. Drahtlose Kommunikationsvorrichtung nach Anspruch 2, wobei N gleich 2M ist.

4. Drahtlose Kommunikationsvorrichtung nach Anspruch 2, wobei die Steuerung (280) die Dämpfungspegel der variablen Dämpfungsglieder in Übereinstimmung mit Werten von Schnittpunkten einer Schätzung des Eigeninterferenzsignals und 2M Sinc-Funktionen bestimmt, die sich an Grenzen der M Fenster zentrieren.

5. Drahtlose Kommunikationsvorrichtung nach Anspruch 1, darüber hinaus umfassend:
einen Frequenzabwärtswandler (118), der dazu konfiguriert ist, ein Ausgangssignal des Subtrahierers abwärts zu wandeln;
ein Filter (122), das dazu angepasst ist, nicht gewählte Teile des abwärtsgewandelten Signals herauszufiltern; und
einen Analog/Digital-Wandler (126), der dazu angepasst ist, ein Ausgangssignal des Filters in ein digitales Signal umzuwandeln.

6. Drahtlose Kommunikationsvorrichtung nach Anspruch 5, darüber hinaus umfassend:
eine Verarbeitungsmaschine (104), die dazu konfiguriert ist, einen zweiten Teil des Eigeninterferenzsignals aus dem Ausgangssignal des Analog/Digital-Wandlers zu entfernen; wobei die Verarbeitungsmaschine mehrere programmierbare Filter umfasst.

7. Drahtlose Kommunikationsvorrichtung nach Anspruch 5, darüber hinaus umfassend:
einen Frequenzaufwärtswandler (116), der dazu konfiguriert ist, ein Sendesignal aufwärts zu wandeln;
ein Filter (120), das dazu angepasst ist, nicht gewählte Teile des aufwärtsgewandelten Signals herauszufiltern; und
einen Digital/Analog-Wandler (124), der dazu angepasst ist, ein Ausgangssignal des Filters in ein analoges Signal umzuwandeln.

8. Verfahren zum Unterdrücken oder Reduzieren eines Eigeninterferenzsignals, wobei das Verfahren umfasst:
Empfangen einer ersten Abtastung eines Sendesignals an einem Empfänger (1010);
Generieren von N verzögerten Versionen der ersten Abtastung des Sendesignal (1020);
Dämpfen der N verzögerten Signale, um N gedämpfte und verzögerte Signale zu generieren (1030);
Kombinieren der N gedämpften und verzögerten Signale, um ein kombiniertes Signal zu generieren, das für einen ersten Teil eines Eigeninterferenzsignals repräsentativ ist (1040);
Subtrahieren des kombinierten Signals von einem über eine Antenne empfangenen Eigeninterferenzsignal, wobei das Eigeninterferenzsignal durch eine Übertragung des Sendesignals verursacht ist (1050);
wobei die N verzögerten Versionen der ersten Abtastung des Sendesignals 2M verzögerte Versionen der ersten Abtastung umfassen, die M zugehörige Paare von verzögerten Versionen der ersten Abtastung bilden;
Einstellen einer ersten Verzögerung, die mit der ersten verzögerten Version von jedem Paar der M zugehörigen Paare von verzögerten Versionen der ersten Abtastung des Sendesignals zusammenhängt, auf einen Wert, der kleiner ist als eine Ankunftszeit des empfangenen Eigeninterferenzsignals; und
Einstellen einer zweiten Verzögerung, die mit der zweiten verzögerten Version von jedem Paar der M zugehörigen Paare von verzögerten Versionen der ersten Abtastung des Sendesignals zusammenhängt, auf einen Wert, der größer ist als die Ankunftszeit des empfangenen Eigeninterferenzsignals;
wobei N eine ganze Zahl größer als oder gleich 2 ist.

9. Verfahren nach Anspruch 8, darüber hinaus umfassend:
Bilden von M Zeitfenstern;
Auswählen der N Verzögerungen so, dass die Ankunftszeit des empfangenen Eigeninterferenzsignals in jedes der M Zeitfenster fällt.

10. Verfahren nach Anspruch 9, wobei N gleich 2M ist.

11. Verfahren nach Anspruch 9, darüber hinaus umfassend:
Dämpfen der N verzögerten Signale in Übereinstimmung mit Werten von Schnittpunkten einer Schätzung des Eigeninterferenzsignals und 2M Sinc-Funktionen, die sich an Grenzen der M Fenster zentrieren.

12. Verfahren nach Anspruch 11, darüber hinaus umfassend:
Einstellen eines Spitzenwerts zumindest einer Teilgruppe der 2M Sinc-Funktionen im Wesentlichen gleich einer Amplitude der Schätzung des Eigeninterferenzsignals.

13. Verfahren nach Anspruch 8, darüber hinaus umfassend:
Abwärtswandeln der Differenz zwischen dem kombinierten Signal und dem empfangenen Eigeninterferenzsignal, um ein abwärtsgewandeltes Signal zu generieren;
Herausfiltern von nicht gewählten Teilen des abwärtsgewandelten Signals; und
Umwandeln des gefilterten Signals in ein digitales Signal.

14. Verfahren nach Anspruch 13, darüber hinaus umfassend:
Entfernen eines zweiten Teils des Eigeninterferenzsignals aus dem umgewandelten digitalen Signal.

15. Verfahren nach Anspruch 14, darüber hinaus umfassend:
Entfernen eines zweiten Teils des Eigeninterferenzsignals aus dem umgewandelten digitalen Signal unter Verwendung mehrerer programmierbarer Filter.

## Revendications

1. Dispositif de communication sans fil (100) comprenant :
au moins une antenne (255) destinée à recevoir ou à émettre un signal ;
un circuit d'annulation (102) apte à recevoir un premier échantillon d'un signal d'émission, ledit circuit d'annulation comprenant :
un bloc de commande ;
un soustracteur (114) apte à recevoir un signal d'auto-interférence via l'antenne, ledit signal d'auto-interférence étant causé par l'émission du signal ;
N trajets (290i), chaque trajet comprenant un élément de retard (270i) et un atténuateur variable associé (275i) dont le niveau d'atténuation varie en réponse au bloc de commande, chaque trajet recevant le premier échantillon du signal d'émission et générant une version retardée et pondérée du premier échantillon du signal d'émission ;
sachant que les N trajets comprennent 2M trajets formant M paires associées de trajets de retard,
sachant qu'un élément de retard disposé dans le premier trajet de chaque paire des M trajets associés génère un retard plus court qu'un temps d'arrivée du signal d'auto-interférence au niveau du soustracteur, et sachant qu'un élément de retard disposé dans le deuxième trajet de chaque paire des M trajets associés génère un retard plus long que le temps d'arrivée du signal d'auto-interférence au niveau du soustracteur ;
un combineur (295) apte à combiner les N versions retardées et pondérées du premier échantillon du signal d'émission pour construire un signal représentatif d'une première partie du signal d'auto-interférence ;
sachant que le soustracteur est apte à soustraire le signal construit du signal d'auto-interférence, sachant que N est un entier supérieur ou égal à 2.

2. Le dispositif de communication sans fil de la revendication 1, sachant que les retards générés par les éléments de retard (270i) de chaque paire associée de trajets de retard forment une fenêtre au sein de laquelle le signal d'auto-interférence correspondant arrive au niveau du soustracteur.

3. Le dispositif de communication sans fil de la revendication 2, sachant que N est égal à 2M.

4. Le dispositif de communication sans fil de la revendication 2, sachant que ledit dispositif de commande (280) détermine les niveaux d'atténuation des atténuateurs variables conformément à des valeurs d'intersections d'une estimation du signal d'auto-interférence et de 2M fonctions sinc centrées à des limites des M fenêtres.

5. Le dispositif de communication sans fil de la revendication 1, comprenant en outre :
un convertisseur de fréquence à la baisse (118) configuré pour convertir à la baisse un signal de sortie du soustracteur ;
un filtre (122) apte à éliminer par filtrage des parties non sélectionnées du signal converti à la baisse ; et
un convertisseur analogique-numérique (126) apte à convertir un signal de sortie du filtre en un signal numérique.

6. Le dispositif de communication sans fil de la revendication 5, comprenant en outre :
un moteur de traitement (104) configuré pour enlever une deuxième partie du signal d'auto-interférence du signal de sortie du convertisseur analogique-numérique ; sachant que ledit moteur de traitement comprend une pluralité de filtres programmables.

7. Le dispositif de communication sans fil de la revendication 5, comprenant en outre :
un convertisseur de fréquence à la hausse (116) configuré pour convertir à la hausse un signal d'émission ;
un filtre (120) apte à éliminer par filtrage des parties non sélectionnées du signal converti à la hausse ; et
un convertisseur numérique-analogique (124) apte à convertir un signal de sortie du filtre en un signal analogique.

8. Procédé d'annulation ou de réduction d'un signal d'auto-interférence, le procédé comprenant :
la réception d'un premier échantillon d'un signal d'émission au niveau d'un récepteur (1010) ;
la génération de N versions retardées du premier échantillon du signal d'émission (1020) ;
l'atténuation des N signaux retardés pour générer N signaux atténués et retardés (1030) ;
la combinaison des N signaux atténués et retardés pour générer un signal combiné représentatif d'une première partie d'un signal d'auto-interférence (1040) ;
la soustraction du signal combiné d'un signal d'auto-interférence reçu via une antenne, ledit signal d'auto-interférence étant causé par une émission du signal d'émission (1050) ;
sachant que les N versions retardées du premier échantillon du signal d'émission comprennent 2M versions retardées du premier échantillon formant M paires associées de versions retardées du premier échantillon ;
le réglage d'un premier retard associé à la première version retardée de chaque paire des M paires associées de versions retardées du premier échantillon du signal d'émission, à une valeur inférieure à un temps d'arrivée du signal d'auto-interférence reçu ; et
le réglage d'un deuxième retard associé à la deuxième version retardée de chaque paire des M paires associées de versions retardées du premier échantillon du signal d'émission, à une valeur supérieure au temps d'arrivée du signal d'auto-interférence reçu ;
sachant que N est un entier supérieur ou égal à 2.

9. Le procédé de la revendication 8, comprenant en outre :
la formation de M fenêtres de temps ;
la sélection des N retards de sorte que le temps d'arrivée du signal d'auto-interférence reçu soit compris dans chacune des M fenêtres de temps.

10. Le procédé de la revendication 9, sachant que N est égal à 2M.

11. Le procédé de la revendication 9, comprenant en outre :
l'atténuation des N signaux retardés conformément à des valeurs d'intersections d'une estimation du signal d'auto-interférence et de 2M fonctions sinc centrées à des limites des M fenêtres.

12. Le procédé de la revendication 11, comprenant en outre :
le réglage d'une valeur de crête d'au moins un sous-ensemble des 2M fonctions sinc pour qu'elle soit sensiblement égale à une amplitude de l'estimation du signal d'auto-interférence.

13. Le procédé de la revendication 8, comprenant en outre :
la conversion à la baisse de la différence entre le signal combiné et le signal d'auto-interférence reçu pour générer un signal converti à la baisse ;
l'élimination par filtrage de parties non sélectionnées du signal converti à la baisse ; et
la conversion du signal filtré en un signal numérique.

14. Le procédé de la revendication 13, comprenant en outre :
le fait d'enlever une deuxième partie du signal d'auto-interférence du signal numérique converti.

15. Le procédé de la revendication 14, comprenant en outre :
le fait d'enlever une deuxième partie du signal d'auto-interférence du signal numérique converti moyennant une pluralité de filtres programmables.
